# EUROPEAN PATENT SPECIFICATION

(11) **EP 1 268 501 B1**
(45) Date of publication and mention of the grant of the patent: **21.07.2004**
(21) Application number: 00944207.0
(22) Date of filing: 31.03.2000
(51) Int. Cl.: C07F 17/02

(54) **AN IMPROVED PROCESS FOR THE PREPARATION OF ACYLFERROCENES**
VERBESSERTE HERSTELLUNGSMETHODE FÜR ACYLFERROCENE
PROCEDE AMELIORE POUR LA PREPARATION D'ACYLFERROCENES

(43) Date of publication of application: 02.01.2003
(73) Proprietor: COUNCIL OF SCIENTIFIC AND INDUSTRIAL RESEARCH, New Delhi 100 001 (IN)
(72) Inventor: CHOUDARY, Boyapati Manoranjan, Hyderabad, A.P. 500 007 (IN); REDDY, Konatham Saidi, Hyderabad, A.P. 500 007 (IN); KANTAM, Mannepalli Lakshmi, Hyderabad, A.P. 500 007 (IN); RAGHAVAN, Kondapuram Vijaya, Hyderabad, A.P. 500 007 (IN)
(74) Representative: Schwarz, Albin, Dr.
(86) International application number: PCT/IN2000/000041
(87) International publication number: WO 2001/074832

(56) References cited:
- DATABASE CHEMABS [Online] CHEMICAL ABSTRACTS SERVICE, COLUMBUS, OHIO, US; NESMEYANOV, A. N. ET AL: "Acylation of ferrocene in the presence of magnesium halides" retrieved from STN Database accession no. 89:129668 XP002150664 & IZV. AKAD. NAUK SSSR, SER. KHIM. (1978), (7), 1685 ,
- RANU, BRINDABAN C. ET AL: "Selective monoacylation of ferrocene" GREEN CHEM., vol. 1, no. 1, 1999, pages 33-34, XP000956359
- CORNELIS, A. ET AL: "Friedel - Crafts acylations with modified clays as catalysts" CATAL. LETT., vol. 6, no. 1, 1990, pages 103-109, XP000946985

## Description

### FIELD OF THE INVENTION

The present invention relates to an improved process for the preparation of acylferrocenes from ferrocenes using C2-C7 acid anhydrides as acylating agents and montmorillonite clays as catalysts.

### BACKGROUND:

This invention particularly relates to an ecofriendly process for the preparation of acylferrocenes from ferrocenes using acid anhydrides as acylating agents and montmorillonite clays as catalysts dispensing the use of acyl chlorides as acylating agents and the corrosive and toxic aluminium chloride, polyphosphoric acid, boron trifluoride and hydrogen fluoride as Friedel-Crafts reagents. This process totally eliminates the disposal of salts formed consequent to the neutralisation process.

Acylferrocenes are important intermediates for the production of varied functional materials such as functional polymers, surfactants, charge transfer complexes, ion sensors, masking agents, coupling agents, chiral catalysts, combustion catalysts for propellants etc. Acylferrocenes are also employed as a medicament for the treatment of sideropenia symptoms and sideropenic anemia (anemia caused by repeated bloodletting).
Friedel-Crafts acylation of ferrocene with acyl halides leads to the formation of acylferrocenes. Ferrocene is 10⁶ times more reactive than benzene in acylation. They are generally prepared by reacting ferrocene with acetic anhydride/acyl chlorides in the presence of aluminium chloride or phosphoric acid. It has been found that both acylferrocenes and diacylferrocenes can be prepared in satisfactory yields by varying the ratio of ferrocene, acid chloride, and the mode of addition as well. Monoacylferrocenes are prepared by the drop-wise addition of the acid chloride, aluminium chloride complex to the ferrocene solution, using equimolar amounts of acid chloride, catalyst and ferrocene. The

Reference may be made to a publication by Rosenblum and Woodward, J. Am. Chem. Soc., 80, 5443, 1958, wherein acylferrocenes are prepared by the reaction of ferrocene with acetyl chloride in the presence of stoichiometric quantities of aluminium chloride. Reference may be made to Vogel's Textbook of Practical Organic Chemistry, 5^{th} Edition, p1014, 1989, wherein acylferrocene is prepared by the reaction of ferrocene with acetic anhydride in the presence of 85% phosphoric acid.

Reference may be made to British patents BP pat. 869504, 819108 wherein ferrocene is reacted with the appropriate acid chloride or anhydride under Friedel-Crafts conditions in the presence of Lewis acids, such as aluminium chloride, boron trifluoride, hydrogen fluoride or polyphosphoric acid in solvents such as carbon disulfide, ethers, nitromethane or ethylene chloride for the manufacture of acylferrocenes. The drawbacks in these processes are that when aluminium chloride is used, diacyl compounds are preferentially obtained, whereas in the presence of hydrogen fluoride or polyphosphoric acid, monoacyl compounds are produced. The other drawbacks are the use of stoichiometric quantities of hazardous aluminium chloride/phosphoric acid and tedious work-up procedure.

Thus, different approaches have been obviously employed to prepare acylferrocenes, and the traditional Lewis acid catalysts are the least favoured due to inherent problems such as use of corrosive regents, separation and lack of reusability, associated with it.

Izv. Akad. Nauk SSSR, Ser. Khim. (1978), (7), 1685 (Database ChemAbs [Online] C.A. Service , accession no. 89:129668-XP 002150654) discloses a process for the preparation of acylferrocenes, wherein ferrocene is acylated in the presence of magnesium halides. Acetylation of ferrocene with Ac₂O in the presence of MgBr₂ etherate in benzene gave 60-70% acetylferrocene.

Green Chem., vol. 1, no. 1, 1999, pages 33-34, discloses a process for the selective monoacylation of ferrocene, wherein ferrocene is adsorbed on the surface of activated acidic alumina and subsequently reacted with a mixture of carboxylic acid and trifluoroacetic anhydride.

Catal. Lett., vol. 6, no. 1, 1990, pages 103-109, discloses the use of metal-ion exchanged K10 montmorillonites as catalysts for Friedel-Crafts acylations of anisole, mesitylene and p-xylene, which gave high yields and showed regioselectivity.

To obviate the above and other drawbacks in the prior art processes, the applicants have developed a novel process for the preparation of acylferrocenes.

### OBJECTS OF THE INVENTION

The main object of the present invention is to provide an improved process for the preparation of acylferrocenes from ferrocenes acid anhydrides as acylating agents and montmorillonite clays as catalysts.

Another object is to use cheap and abundantly available montmorillonite catalysts for the preparation of acylferrocenes.

Yet another object is to employ reusable, easily separable solid acid catalysts in the preparation of acylferrocenes.

Still another object is to use K10 montmorillonite/metal ion exchanged K10 montmorillonites as catalysts.

### SUMMARY OF THE INVENTION:

The invention relates to a process for the preparation of acylferrocenes employing commercially available montmorillonite and various metal ion exchanged acid catalysts for effecting acylation. The invention relates to the use of commercially available K10 montmorillonite and various metal ion exchanged K10 montmorillonites as soild acid catalysts for effecting acylation of ferrocenes with acid anhydrides having C2 to C7 carbon atoms as acylating agents. The invention offers excellent yields, greater selectivity towards monoacyl ferrocenes, and almost negligible effluents. These advantage are quite impressive, when compared with the process currently practiced utilising hazardous anhydrous aluminium chloride as a reagent which generates large volumes of solid wastes. Therefore, the process described in this invention is technically feasible, economically viable and environmentally friendly.

### DETAILED DESCRIPTION OF THE INVENTION:

Accordingly, the invention provides a process for the preparation of acylferrocenes comprising the steps of reacting a ferrocene with an acid anhydride acylating agent, having C2 to C7 carbon atoms, in the presence of a montmorillonite or metal ion exchanged K10 montmorillonites clay catalyst, in a solvent, at a temperature in the range of about 80 to 165 deg celcius for a period of 3 to 8 hrs and recovering the acylferrocenes by conventional methods.

In an embodiment, the acylating agent is selected from the group of acid anhydrides having carbon atoms C2 - C7.

In another embodiment, the acylating agent is selected from the group of acid anhydrides having carbon atoms C2 - C7 comprising acetic anhydride to heptanoic anhydride.

In another embodiment, the substituted hydrocarbon solvent is chlorobenzene.

In yet another embodiment, the montmorillonite/metal ion exchanged K10 montmorillonites clay catalyst is selected from Co²⁺, Zn²⁺, Al³⁺, Ce³⁺, La³⁺, or Zr⁴⁺ - montmorillonites.

In still another embodiment, the amount of the catalyst used is 5 to 50% by weight with respect to the substrate charged.

In another embodiment, the solvent is selected from substituted hydrocarbons or anhydrides acting as self solvents.

In an embodiment, the reaction effected at a temperature in the range of 120 to 165° C for 3-8 hrs.

In the present invention, the applicants have used the commercially available K10 montmorillonite and various metal ion exchanged K10 montmorillonites as solid acid catalysts for the acylation of ferrocenes with C2-C7 acid anhydrides (acetic anhydride to heptanoic anhydride) as acylating agents for the first time.

In acid treated montmorillonite, K10, the density of the Bronsted acidic sites increases because of increased number of broken edges resulting from the disruption of stacked layers in natural montmorillonite, while the Lewis acidity decreases due to desorption of metal ion inherently present in natural montmorillonite during acid treatment. K10 montmorillonite with very high Bronsted acidity, thus induces the acylation as exemplified above. Introduction of transition metals in montmorillonite K10 by exchange process increases the Lewis acidity of the material and simultaneously decreases Bronsted acidity.

The efficacy of various modified montmorillonites is in the order of zeolite < Cu²⁺ mont. < Fe³⁺ mont. < Zn²⁺ mont. < FePILC-K10 < K10 mont in acylation of ferrocenes. This result indicates the higher density of acidic sites, i.e., Bronsted sites in K10 montmorillonite or Lewis sites in FePILC-K10 induces the acylation of ferrocenes.

All the metal ion- exchanged K10 montmorillonite catalysts were prepared as described in example 1 and employed in the acylation of ferrocenes with acid anhydrides as acylating agents as described in the examples.

The following examples are given by way of illustration of the present invention and therefore should not be construed to limit the scope of the invention.

### Example 1

A series of catalysts were prepared as described hereunder. The acylation of ferrocenes with acetic anhydride of different catalysts is provided in Table 1.Table 2 details the conversion in % employing different acylating agents.
A) K10 montmorillonite (obtained from M/s. Fluka, a Sigma Aldrich Company, Switzerland) was used as such.
B) Metal exchanged montmorillonites:
   Fe³⁺ exchanged montmorillonite: 80 g of K10 montmorillonite (obtained from M/s. Fluka, a Sigma Aldrich Company, Switzerland) was added to 1 It. aqueous solution of FeCl₃ (1.0 M) under stirring. Stirring was maintained for 16-30 h in order to saturate the exchange capacity of K10 montmorillonite. The clay suspension was centrifuged and the supernatant solution was discarded. Washing cycles were repeated until the disappearance of Cl⁻ ions from the discarded water. The clay was dried overnight in an oven at 120°C and finally ground in a mortar.
   Other metal exchanged clays such as Cu²⁺, Co²⁺, Zn²⁺, Al³⁺, Ce³⁺, La³⁺, or Zr⁴⁺ - montmorillonite catalysts were prepared in a similar procedure by dissolving the corresponding metal salts.
C) FePILC from K10 montmorillonite: (FePILC-K10 = Iron pillared clay)

The Na-montmorillonite was prepared by suspending and stirring commercial K10 montmorillonite in excess aqueous sodium chloride solution for 24h. The Na-montmorillonite was separated by centrifugation and washed free of chloride ions by deionised water and air dried. The cation exchange capacity of the air-dried clay is 0.8equi. Trinuclear acetato hydroxy-iron(III) nitrate: Fe₃(OCOCH₃)₇OH.2H₂ONO₃.was used as the cation source for exchanging with the Na-montmorillonite. It was prepared by dissolving 80.8 g of Fe(NO₃)₃ .5H₂O in 50 ml of ethyl alcohol. This was reacted with 140 ml of acetic anhydride with the evolution of heat. The solution was then cooled in an ice bath and the resulting precipitate was separated and used without further purification in the pillaring procedure.
Cation exchange: A 0.04 mole/l aqueous solution of trinuclear acetato hydroxy-iron(III) nitrate(19.48 g) in 700ml of water was added to stirred 1% Na-montmorillonite aqueous suspension (8g of Na-mont in 800ml of water). The mixture was sitrred for 3h at 40°C, separated by centrifugation and washed with water several times to remove excess iron ions and dried in air to get FePILC-K10.

### Example 2

Ferrocene (1mmol, 0.186g), acetic anhydride (1ml, 10mmol) and chlorobenzene (10ml). were heated at reflux temperature in a R.B flask (50 ml) in presence of K10 montmorillonite catalyst (0.200g). After completion of the reaction (followed by TLC), the reaction mixture was filtered and concentrated on rotavapor to obtain the crude product. The crude product was subjected to flash chromatography to afford acylated products (0.193g).

### Example 3

Ferrocene (lmmol, 0.186g), acetic anhydride (1ml, 10mmol) and chlorobenzene (10ml) were heated at reflux temperature in a R.B flask (50 ml) in presence of Fe³⁺ exchanged montmorillonite catalyst (0.200g). After completion of the reaction (followed by TLC), the reaction mixture was filtered and concentrated on rotavapor to obtain the crude product. The crude product was subjected to flash chromatography to afford acylated products (0.134g).

### Example 4

Ferrocene (1mmol, 0.186g), acetic anhydride (1ml.10mmol) and chlorobenzene (10ml) were heated at reflux temperature in a R.B flask (50 ml) in presence of Zn²⁺- montmorillonite catalyst (0.200g). After completion of the reaction (followed by TLC), the reaction mixture was filtered and concentrated on rotavapor to obtain the crude product. The crude product was subjected to flash chromatography to afford acylated products (0.134g).

### Example 5

Ferrocene (1mmol, 0.186g), acetic anhydride (1ml, 10mmol) and chlorobenzene (10ml) were heated at reflux temperature in a R.B flask (50 ml) in presence of Cu²⁺ montmorillonite catalyst (0.200g). After completion of the reaction (followed by TLC), the reaction mixture was filtered and concentrated on rotavapor to obtain the crude product. The crude product was subjected to flash chromatography to afford the pure products (0.114g).

### Example 6

Ferrocene (1mmol, 0.186g), acetic anhydride (1ml, 10mmol) and chlorobenzene (10ml) were heated at reflux temperature in a R.B flask (50 ml) in presence of Fe-pillared K10 montmorillonite catalyst (0.200g). After completion of the reaction (followed by TLC), the reaction mixture was filtered and concentrated on rotavapor to obtain the crude product. The crude product was subjected to flash chromatography to afford acylated products (0.162g).

### Example 7

Ferrocene (1mmol, 0186g), acetic anhydride (1ml, 10mmol) and chlorobenzene (10ml) were heated at reflux temperature in a R.B. flask (50 ml) in presence of zeolite catalyst (0.200g). After completion of the reaction (followed by TLC), the reaction mixture was filtered and concentrated on rotavapor to obtain the crude product. The crude product was subjected to flash chromatography to afford acylated products (0.112g).

### Example 8

Ferrocene (1mmol, 0.186g), acetic anhydride (2mmol) and chlorobenzene (3ml) were heated at reflux temperature in a Schlenk flask (5ml) in presence of K10 montmorillonite catalyst (0.093g). After completion of the reaction (followed by TLC), the reaction mixture was filtered and concentrated on rotavapor to obtain the crude product. The crude product was subjected to flash chromatography to afford acylated products (0.134g).

### Example 9

Ferrocene (1mmol, 0.186g), propionic anhydride (2mmol) and chlorobenzene (3ml) were heated at reflux temperature in a Schlenk flask (5 ml) in presence of K10 montmorillonite catalyst (0.093g). After completion of the reaction (followed by TLC), the reaction mixture was filtered and concentrated on rotavapor to obtain the crude product. The crude product was subjected to flash chromatography to afford the pure products (0.194g).

### Example 10

Ferrocene (1mmol, 0.186g), butyric anhydride (2mmol) and chlorobenzene (3ml) were heated at reflux temperature in a Schlenk flask (5ml) in presence of K10 montmorillonite catalyst (0.093g). After completion of the reaction (followed by TLC), the reaction mixture was filtered and concentrated on rotavapor to obtain the crude product. The crude product was subjected to flash chromatography to afford the pure products (0.204g).

### Example 11

Ferrocene (1mmol, 0.186g) and valeric anhydride (2mmol) and chlorobenzene (3ml) were heated in reflux temperature in a Schlenk flask (5ml) in presence of K10 montmorillonite catalyst (0.093g). After completion of the reaction (followed by TLC), the reaction mixture was filtered and concentrated on rotavaporto obtain the crude product. The crude product was subjected to flash chromatography to afford the acylated products (0.217g).

### Example 12

Ferrocene (1mmol, 0.186g) and hexanoic anhydride (2mmol) and chlorobenzene (3ml) were heated at reflux temperature in a Schlenk flask (5ml) in presence of K10 montmorillonite catalyst (0.093g). After completion of the reaction (followed by TLC), the reaction mixture was filtered and concentrated on rotavapor to obtain the crude product. The crude product was subjected to flash chromatography to afford the acylated products (0.220g).

### Example 13

Ferrocene (1mmol, 0.186g) and acetic anhydride (2.5ml) were heated to reflux temperature in a Schlenk flask (5ml) in presence of K10 montmorillonite catalyst (0.047g). After completion of the reaction (followed by TLC), the reaction mixture was filtered and the excess anhydride was recovered by distillation to obtain the crude product. The crude product was subjected to flash chromatography to afford acylated the products (0.207g).

### Example 14

Ferrocene (1mmol, 0.186g) and propionic anhydride (2.5ml) were stirred at an oil bath temperature of 165°C in a Schlenk flask (5 ml) in presence of K10 montmorillonite catalyst (0.047g). After completion of the reaction (followed by TLC), the reaction mixture was filtered and the excess anhydride by was recovered distillation to obtain the crude product. The crude product was subjected to flash chromatography to afford acylated products (0.210g).

### Example 15

Ferrocene (1mmol, 0.186g) and butyric anhydride (2.5ml) were stirred at an oil bath temperature of 165°C in a Schlenk flask (5 ml) in the presence of K10 montmorillonite catalyst (0.047g). After completion of the reaction (followed by TLC), the reaction mixture was filtered and the excess anhydride was recovered by distillation to obtain the crude product. The crude product was subjected to flash chromatography to afford acylated products (0.230g).

### Example 16

Ferrocene (1mmol, 0.186g) and valeric anhydride (2.5ml) were stirred at an oil bath temperature of 165°C in a Schlenk flask (5ml) in presence of K10 montmorillonite catalyst (0.047g). After completion of the reaction (followed by TLC), the reaction mixture was filtered and the excess anhydride was recovered by distillation to obtain the crude product. The crude product was subjected to flash chromatography to afford the acylated products (0.240g).

### Example 17

Ferrocene (1mmol, 0.186g) and hexanoic anhydride (2.5ml) were stirred at an oil bath temperature of 165°C in a Schlenk flask (5 ml) in the presence of K10 montmorillonite catalyst (0.047g). After completion of the reaction (followed by TLC), the reaction mixture was filtered and the excess anhydride was recovered by distillation to obtain the crude product. The crude product was subjected to flash chromatography to afford the acylated products (0.250g).

### Example 18

Ferrocene (10mmol, 1.86g) and acetic anhydride (25ml) were heated to reflux in a Schlenk flask (50ml) in the presence of K10 montmorillonite catalyst (0.470g). After completion of the reaction (followed by TLC), the reaction mixture was filtered and the excess anhydride was recovered by distillation to obtain the crude product. The crude product was subjected to flash chromatography to afford the acylated products (2.00g).

The acylation of ferrocenes with acetic anhydride by different catalysts is provided in Tablel. Table 2 provides the conversion in % on acylation of ferrocene with different acylating agents.

**Table 1**

| Acylation of ferrocenes with acetic anhydride by different catalysts | | | | |
|---|---|---|---|---|
| S.No. | Example^{a} | Catalyst | Time [h] | Conversion^{b} [%] |
| 1 | 2 | K10 mont | 8 | 85 |
| 2 | 3 | Fe³⁺-exchanged mont | 24 | 60 |
| 3 | 4 | Zn²⁺-exchanged mont. | 24 | 62 |
| 4 | 5 | Cu²⁺-exchanged mont | 24 | 53 |
| 5 | 6 | FePILC-K10 | 24 | 75 |
| 6 | 7 | Zeolite | 24 | 52 |

| | | | | |
|---|---|---|---|---|
| ^{a}As exemplified in the text. | | | | |
| ^{b}From NMR Yields based on ferrocene. | | | | |

**Table 2**

| Acylation of Ferrocenes | | | | | | | |
|---|---|---|---|---|---|---|---|
| S.No | Example^{a} | Solvent | Acylating Agent | Temp.°C | Conversion^{b} [%] | Selectivity^{c}[%] | |
| | | | | | | Mono | di |
| 1 | 8 | chlorobenzene | acetic anhydride | 150-155 | 62 | 96 | 4 |
| 2 | 9 | chlorobenzene | propionic anhydride | 150-155 | 85 | 97 | 3 |
| 3 | 10 | chlorobenzene | butyric anhydride | 150-155 | 84 | 96 | 4 |
| 4 | 11 | chlorobenzene | valeric anhydride | 150-155 | 85 | 97 | 3 |
| 5 | 12 | chlorobenzene | hexanoic anhydride | 150-155 | 82 | 97 | 3 |
| 6 | 13 | acetic anhydride | acetic anhydride | 150-155 | 96 | 96 | 4 |
| 7 | 14 | propionic anhydride | propionic anhydride | 165 | 92 | 98 | 2 |
| 8 | 15 | butyric anhydride | butyric anhydride | 165 | 95 | 98 | 2 |
| 9 | 16 | valeric anhydride | valeric anhydride | 165 | 94 | 98 | 2 |
| 10 | 17 | hexanoic anhydride | hexanoic anhydride | 165 | 93 | 98 | 2 |
| 11 | 18 | acetic anhydride | acetic anhydride | 165 | 92 | 97 | 3 |

| | | | | | | | |
|---|---|---|---|---|---|---|---|
| ^{a} As exemplified in the text. | | | | | | | |
| ^{b} From NMR; Yields based on ferrocene (mono-and di-acylated) | | | | | | | |
| ^{c} Based on NMR. | | | | | | | |

### ADVANTAGES OF THE INVENTION:

1. The process is novel and ecofriendly for the preparaton of acylferrocenes.
2. The process eliminates the use of the corrosive aluminium chloride.
3. Clays are used as catalysts for the acylation of ferrocenes for the first time in place of the corrosive aluminium chloride and phosphoric acid.
4. Clay, used as the support of the catalyst or as the catalyst, is cheap and abundantly available in nature.
5. The selectivity of the reaction and the yields are quantitative.
6. The invention offers excellent yields, greater selectivity towards monoacyl ferrocenes, and almost negligible effluents. These advantage are quite impressive, when compared with the process currently practiced utilising hazardous anhydrous aluminium chloride as a reagent which generates large volumes of solid wastes.
   Therefore, the process described in this invention is technically feasible, economically viable and environmentally friendly.
7. The reactions are simple with shorter duration and the work-up procedure being simple makes the process economical.
8. The present process envisages no disposal problem as the catalyst can be used for several cycles. The catalyst was subjected to 4 recycles which displayed consistent activity.
9. The present process is environmentally safe since there is no disposal problem.

## Claims

1. A process for the preparation of acylferrocenes comprising the steps of reacting a ferrocene with an acid anhydride acylating agent, having C2 to C7 carbon atoms, in the presence of a montmorillonite or metal ion exchanged K10 montmorillonites clay catalyst, in a solvent, at a temperature in the range of about 80 to 165 deg celcius for a period of 3 to 8 hrs and recovering the acylferrocenes by conventional methods.

2. A process claimed in claim I wherein the acylating agents is selected from the group of acid anhydrides having carbon atoms C2 - C7.

3. A process claimed in claim 1 wherein the acylating agent is selected from the group of acid anhydrides comprising acetic anhydride to heptanoic anhydride.

4. A process as claimed in claim 1 wherein the montmorillonite/metal ion exchanged K10 montmorillonites clay catalyst is selected from Co²⁺ , Zn²⁺, Al³⁺, Ce³⁺, La³⁺, or Zr⁴⁺ - montmorillonites.

5. A process claimed in claim 1 wherein the amount of the catalyst used is 5 to 50% by weight with respect to the substrate charged.

6. A process claimed in claim 1 wherein the solvent is selected from substituted hydrocarbons or anhydrides acting as self solvents.

7. A process as claimed in claim 1 wherein the substituted hydrocarbon solvent is chlorobenzene.

8. A process as claimed in claim 1 wherein the reaction effected at a temperature in the range of 120 to 165° C for 3-8 hrs.

## Patentansprüche

1. Verfahren zur Herstellung von Acylferrocenen, umfassend die Schritte des Umsetzens eines Ferrocens mit einem Säureanhydrid-Acylierungsmittel, das C2- bis C7-Kohlenstoffatome aufweist, in Gegenwart eines Montmorillonit- oder Metallionen-ausgetauschten K10-Montmorillonit-Ton-Katalysators, in einem Lösungsmittel, bei einer Temperatur im Bereich von etwa 80 bis 165 Grad Celsius, für eine Dauer von 3 bis 8 Stunden, und des Gewinnens der Acylferrocene durch herkömmliche Methoden.

2. Verfahren, wie in Anspruch 1 beansprucht, wobei das Acylierungsmittel ausgewählt ist aus der Gruppe von Säureanhydriden mit Kohlenstoffatomen C2-C7.

3. Verfahren, wie in Anspruch 1 beansprucht, wobei das Acylierungsmittel ausgewählt ist aus der Gruppe von Säureanhydriden, die von Essigsäureanhydrid bis Haptansäureanhydrid umfasst.

4. Verfahren, wie in Anspruch 1 beansprucht, wobei der Montmorillonit/Metallionenausgetauschte K10-Montmorillonit-Ton-Katalysator ausgewählt ist aus Co²⁺-, Zn²⁺-, Al³⁺-, Ce³⁺-, La³⁺- oder Zr⁴⁺-Montmorilloniten.

5. Verfahren, wie in Anspruch 1 beansprucht, wobei die Menge des verwendeten Katalysators in Bezug auf das eingesetzte Substrat 5 bis 50 Gew.% beträgt.

6. Verfahren, wie in Anspruch 1 beansprucht, wobei das Lösungsmittel ausgewählt ist aus substituierten Kohlenwasserstoffen oder Anhydriden, die als Selbstlösungsmittel wirken.

7. Verfahren, wie in Anspruch 1 beansprucht, wobei das substituierte Kohlenwasserstofflösungsmittel Chlorbenzol ist.

8. Verfahren, wie in Anspruch 1 beansprucht, wobei die Reaktion bei einer Temperatur im Bereich von 120 bis 165°C 3-8 Stunden lang durchgeführt wird.

## Revendications

1. Procédé de préparation d'acylferrocènes comprenant les étapes consistant à faire réagir un ferrocène avec un agent d'acylation de type anhydride d'acide, comportant 2 à 7 atomes de carbone, en présence d'un catalyseur à base d'argile de type montmorillonite ou montmorillonites K10 à ions métalliques échangés, dans un solvant, à une température dans la gamme d'environ 80 à 165°C pendant 3 à 8 heures et à récupérer les acylferrocènes par des procédés classiques.

2. Procédé selon la revendication 1, dans lequel l'agent d'acylation est choisi dans le groupe des anhydrides d'acide comportant 2 à 7 atomes de carbone.

3. Procédé selon la revendication 1, dans lequel l'agent d'acylation est choisi dans le groupe des anhydrides d'acide comprenant l'anhydride acétique à l'anhydride heptanoïque.

4. Procédé selon la revendication 1, dans lequel le catalyseur à base d'argile de type montmorillonite/montmorillonites K10 à ions métalliques échangés est choisi parmi Co²⁺, Zn²⁺, Al³⁺, Ce³⁺, La ³⁺ ou Zr⁴⁺-montmorillonites .

5. Procédé selon la revendication 1, dans lequel la quantité du catalyseur utilisé est de 5 à 50 % en poids par rapport au substrat chargé.

6. Procédé selon la revendication 1, dans lequel le solvant est choisi parmi les hydrocarbures substitués ou les anhydrides jouant eux-mêmes le rôle de solvants.

7. Procédé selon la revendication 1, dans lequel le solvant de type hydrocarbure substitué est le chlorobenzène.

8. Procédé selon la revendication 1, dans lequel la réaction est réalisée à une température dans la gamme de 120 à 165°C pendant 3 à 8 h.
